# EUROPÄISCHE PATENTANMELDUNG

(11) **EP 4 660 663 A1**
(43) Veröffentlichungstag der Anmeldung: **10.12.2025**
(21) Anmeldenummer: 25178909.5
(22) Anmeldetag: 27.05.2025
(51) Int. Cl.: G01S 7/481, G01S 7/4863, G01S 7/4914, G01S 7/497, G01S 17/10, G01S 17/32, G01S 17/42, G01S 17/894

(54) **OPTOELEKTRONISCHER SENSOR ZUM ERFASSEN VON OBJEKTEN IN EINEM ÜBERWACHUNGSBEREICH**

(30) Priorität: 06.06.2024 DE 102024115765
(71) Anmelder: SICK AG, 79183 Waldkirch (DE)
(72) Erfinder: Bayesteh, Shima, 20097 Hamburg (DE); Rosenkranz, Jörn, 23858 Reinfeld in Holstein (DE); Hölling, Andy, 22529 Hamburg (DE); Bödewadt, Jörn, 20144 Hamburg (DE)
(74) Vertreter: Manitz Finsterwald Patent- und Rechtsanwaltspartnerschaft mbB

(57) **Zusammenfassung**

Die vorliegende Erfindung betrifft einen optoelektronischen Sensor zum Erfassen von Objekten in einem Überwachungsbereich, mit einer Lichtsenderanordnung, welche zum Erzeugen eines Sendelichtflecks auf einem im Überwachungsbereich anwesenden Objekt eingerichtet ist und eine Lichtquelle zum Erzeugen von Sendelicht und eine Sendeoptikanordnung zum Fokussieren des Sendelichts umfasst, und mit einer Empfangsanordnung, umfassend einen Lichtempfänger und eine Empfangsoptikanordnung, welche zum Abbilden eines Sendelichtflecks, welcher von der Lichtsenderanordnung auf einem im Überwachungsbereich anwesenden Objekt erzeugt wurde, in einen Empfangslichtfleck auf dem Lichtempfänger eingerichtet ist. Die Erfindung sieht vor, dass die Sendeoptikanordnung wenigstens zwei Linsen umfasst, deren Abstand zueinander einstellbar ist, und/oder die Empfangsoptikanordnung wenigstens zwei Linsen umfasst, deren Abstand zueinander einstellbar ist.

## Beschreibung

Die vorliegende Erfindung betrifft einen optoelektronischen Sensor zum Erfassen von Objekten in einem Überwachungsbereich, mit einer Lichtsenderanordnung, welche zum Erzeugen eines Sendelichtflecks auf einem im Überwachungsbereich anwesenden Objekt eingerichtet ist und eine Lichtquelle zum Erzeugen von Sendelicht und eine Sendeoptikanordnung zum Fokussieren des Sendelichts umfasst, und mit einer Empfangsanordnung, umfassend einen Lichtempfänger und eine Empfangsoptikanordnung, welche zum Abbilden eines Sendelichtflecks, welcher von der Lichtsenderanordnung auf einem im Überwachungsbereich anwesenden Objekt erzeugt wurde, in einen Empfangslichtfleck auf dem Lichtempfänger eingerichtet ist.

Bei solchen gattungsgemäßen optoelektronischen Sensoren befinden sich die Lichtsenderanordnung und die Empfangsanordnung auf derselben Seite des Überwachungsbereichs. Falls ein Objekt im Überwachungsbereich anwesend ist, wird das von der Lichtsenderanordnung ausgesendete Sendelicht an der Oberfläche des Objekts in Richtung der Empfangsanordnung remittiert, d.h. diffus oder spiegelnd reflektiert. Für eine ortsaufgelöste Erfassung des Empfangslichtflecks kann die Empfangsanordnung einen Lichtempfänger mit einem eindimensionalen oder zweidimensionalen Array von lichtempfindlichen Empfangselementen aufweisen.

Eine ortsaufgelöste Erfassung der Objekte kann auf verschiedene Weise erfolgen, beispielsweise durch ein periodisches Abtasten oder Scannen des Überwachungsbereichs. In verschiedenen Anwendungsfällen ist es wünschenswert, eine Ortsauflösung nicht nur in ein oder zwei lateralen Dimensionen erhalten zu können, sondern als weitere Dimension auch eine Abstands- oder Tiefeninformation bezüglich des erfassten Objekts ermitteln zu können. Derartige abstandsmessende optische Sensoren oder abstandsmessende Lichttaster werden auch als LIDAR-Sensoren oder LIDAR-Systeme (LIDAR: Abkürzung für englisch "light detecting and ranging") bezeichnet. Für diesen Typ von Sensoren werden oftmals spezielle Lichtempfänger eingesetzt, welche beispielsweise dazu eingerichtet sind, die Abstandsinformationen nach dem Lichtlaufzeitverfahren zu ermitteln. Solche Lichtempfänger oder Sensorarrays werden auch als TOF-Sensoren (TOF: Abkürzung für englisch "time of flight" als Synonym für die Lichtlaufzeit) bezeichnet. TOF-Sensoren sind dazu eingerichtet, die Laufzeit eines Lichtpulses zwischen dem Zeitpunkt seiner Aussendung und dem Zeitpunkt der Erfassung des korrespondierenden, am Objekt reflektierten Lichtpulses zu erfassen, und zwar separat für jedes lichtempfindliche Element des TOF-Sensors.

Für viele Ausgestaltungen von gattungsgemäßen optoelektronischen Sensoren, insbesondere für LIDAR-Sensoren, ist es notwendig, dass das Sendesichtfeld der Lichtsenderanordnung und das Empfangssichtfeld der Empfangsanordnung möglichst präzise übereinstimmen. Unter dem Sendesichtfeld wird insbesondere die Größe des Sendelichtflecks verstanden, welcher auf der Oberfläche eines im Überwachungsbereich anwesenden Objekts erzeugt wird. Unter dem Empfangssichtfeld wird derjenige Bereich auf einem erfassten Objekt verstanden, welcher von der Empfangsoptikanordnung in einen, insbesondere vorgegebenen, Bereich auf dem Lichtempfänger projiziert wird. Für eine möglichst hohe Erfassungsgenauigkeit und Erfassungsempfindlichkeit dürfen Abweichungen bei der Übereinstimmung der beiden Sichtfelder ein bestimmtes Maß nicht überschreiten. Abweichungen der Sichtfelder können zum einen durch einen lateralen Versatz der Sichtfelder zueinander hervorgerufen werden. Diese Abweichungen lassen sich durch geeignete Justiermaßnahmen korrigieren, insbesondere durch Justieren der lateralen Relativposition zwischen der Lichtquelle und der Sendeoptikanordnung bzw. durch Justieren der lateralen Relativposition des Lichtempfängers und der Empfangsoptikanordnung.

Neben einem derartigen lateralen Versatz können jedoch auch Unterschiede bei der Größe, d.h. Unterschiede des Durchmessers oder allgemein der Fläche der beiden Sichtfelder zu einer unzulänglichen Übereinstimmung der Sichtfelder beitragen. Ein Grund für eine fehlende Übereinstimmung der Sichtfeldgrößen besteht darin, dass aufgrund von Fertigungstoleranzen die Brennweiten von Optikelementen oder Linsen, die in den Lichtsender- bzw. Empfangsanordnungen verbaut werden, von ihren jeweiligen Sollbrennweiten abweichen. Diese Brennweitenabweichungen führen zu Abweichungen des Abbildungsmaßstabs und damit zu Variationen der jeweiligen Sichtfeldgrößen. Die Brennweiten der verwendeten Linsen können sowohl innerhalb einer Charge als auch chargenübergreifend variieren.

Ein Ansatz zur Lösung dieses Problems besteht darin, nur solche Linsen zu verwenden, deren Brennweite nicht oder nur minimal von der Sollbrennweite abweicht. Dies führt jedoch dazu, dass gegebenenfalls eine große Menge an Linsen als Ausschuss klassifiziert werden muss.

Ein weiterer Ansatz besteht darin, auch größere Abweichungen von der Sollbrennweite zu tolerieren und im Rahmen eines Sortierprozesses die verwendeten Linsen für die Sende- und Empfangsoptikanordnungen so zu paaren, dass die Größenabweichungen der Sichtfelder minimiert werden. Bei diesem Ansatz wird also nicht eine möglichst gute Einhaltung eines absoluten Sollwerts der jeweiligen Sichtfelder angestrebt, sondern eine möglichst gute Übereinstimmung der jeweiligen Sichtfeldgrößen. Somit können die Absolutgrößen der Sende- bzw. Empfangssichtfelder zwischen verschiedenen Exemplaren von optoelektronischen Sensoren auch variieren.

Bei diesen Lösungsansätzen ist es notwendig, dass alle verwendeten Linsen zunächst bezüglich ihrer Brennweite exakt vermessen werden müssen. Bei beiden Ansätzen müssen für eine bestimmte Anzahl an verwendbaren Linsen zunächst Mengen an Linsen hinsichtlich ihrer Brennweite charakterisiert werden, welche erheblich größer sind als die tatsächlich benötigten Mengen. Es besteht zudem das Risiko, dass Linsen übrigbleiben, die als Ausschuss verworfen werden müssen, weil keine geeigneten Linsen mit korrespondierender Brennweite gefunden wurden. Diese Notwendigkeiten erhöhen die Fertigungskosten in erheblichem Ausmaß.

In EP 2 607 924 A1 sind ein optoelektronischer Entfernungsmesser und ein Justierverfahren beschrieben, bei dem zur Fokussierung im Sende- und Empfangslichtpfad eine Baugruppe, die eine Lichtquelle und einen Lichtempfänger trägt, gegenüber einem Optikträger, der eine Sendeoptik und eine Empfangsoptik trägt, verschoben werden kann.

Es ist die Aufgabe der Erfindung, einen optoelektronischen Sensor der eingangs genannten Art dahingehend zu verbessern, dass die Anpassung der Brennweiten der Sende- und Empfangsoptikanordnung aneinander verbessert ist.

Die Lösung der Aufgabe erfolgt durch einen optoelektronischen Sensor mit den Merkmalen des Anspruchs 1. Die Erfindung sieht vor, dass die Sendeoptikanordnung wenigstens zwei Linsen umfasst, deren Abstand zueinander einstellbar ist, und/oder die Empfangsoptikanordnung wenigstens zwei Linsen umfasst, deren Abstand zueinander einstellbar ist. Hierbei wird ausgenutzt, dass bei mehrlinsigen Sende- bzw. Empfangsanordnungen, die Gesamtbrennweite nicht nur von den Brennweiten der einzelnen Linsen abhängt, sondern auch von deren Abstand zueinander, d.h. einer jeweiligen Relativposition längs der optischen Achse der jeweiligen Optikanordnung.

Für die Umsetzung der erfindungsgemäßen Lösung gibt es verschiedene Möglichkeiten. So müssen nicht alle Linsen einer jeweiligen Optikanordnung längsverschiebbar sein. Es ist prinzipiell auch ausreichend, wenn nur jeweils eine Linse einer Optikanordnung längs der optischen Achse einstellbar oder versetzbar ist. Allerdings ist auch nicht ausgeschlossen, dass auch zwei oder mehr Linsen längs der optischen Achse zum Einstellen des Abstands verschoben oder versetzt werden können. Der Abstand der jeweiligen Optikanordnung zu der Lichtquelle bzw. zu dem Lichtempfänger kann zur Umsetzung der erfindungsgemäßen Lösung grundsätzlich außer Betracht bleiben, aber im Rahmen der sonstigen Erfordernisse, z.B. zur Anpassung des Fokus, entsprechend gewählt werden.

Gemäß einer vorteilhaften Ausführungsform der Erfindung ist der einstellbare Abstand zwischen den Linsen der Sendeoptikanordnung und/oder der einstellbare Abstand zwischen den Linsen der Empfangsoptikanordnung derart gewählt, dass die Größe des Sendelichtflecks im Wesentlichen gleich der Größe eines Empfangssichtfeldes der Empfangsanordnung ist. Mit anderen Worten wird der einstellbare Abstand, beispielsweise im Rahmen eines entsprechenden Justierverfahrens, derart eingestellt, dass der Sendelichtfleck möglichst exakt in das Empfangssichtfeld passt, d.h. das Sendesichtfeld weder größer noch kleiner als das Empfangssichtfeld ist. In diesem Zusammenhang bezieht sich der Ausdruck "Größe" beispielsweise auf den Durchmesser von kreisförmigen Sichtfeldern oder auf die Höhe und Breite von rechteckigen Sichtfeldern. Auch elliptische oder anders geformte Sichtfelder können bezüglich ihrer Größe über geeignete geometrische Parameter definiert werden. Je nach Anwendungsfall ist es auch nicht ausgeschlossen, dass eine Übereinstimmung der Größen der Sichtfelder nicht in allen Dimensionen gegeben sein muss. Es sind auch Fälle denkbar, wo beispielsweise eine Übereinstimmung in einer ersten Raumrichtung möglichst gut sein muss, während in einer zweiten, hierzu senkrechten Raumrichtung eine etwas größere Abweichung der Größen der Sichtfelder toleriert werden kann.

Gemäß einer weiteren vorteilhaften Ausführungsform ist der einstellbare Abstand zwischen den Linsen der Sendeoptikanordnung und/oder der einstellbare Abstand zwischen den Linsen der Empfangsoptikanordnung derart gewählt, dass die resultierende Gesamtbrennweite der Sendeoptikanordnung gleich einer vorgegebenen Sendeoptiksollbrennweite ist und/oder die resultierende Gesamtbrennweite der Empfangsoptikanordnung gleich einer vorgegebenen Empfangsoptiksollbrennweite ist. Insbesondere können bei einer symmetrischen Konfiguration des Sende- und Empfangslichtpfads die Sollbrennweiten der Sendeoptikanordnung und der Empfangsoptikanordnung gleich groß sein.

Dies stellt sozusagen einen alternativen Ansatz bei der Auswahl geeigneter Linsenabstände dar. Die Sende- bzw. Empfangsoptikanordnung wird jeweils im Hinblick auf die Einhaltung einer vorgegebenen Sollbrennweite justiert. Somit können die Lichtsenderanordnung und die Empfangsanordnung unabhängig voneinander justiert werden. Ein paarweises Abgleichen oder Abstimmen von Lichtsender- und Empfangsanordnung ist nicht erforderlich.

Grundsätzlich können auch beide Ansätze, d.h. das Abgleichen von Lichtsender- und Empfangsanordnung bezüglich übereinstimmender Lichtflecke einerseits und das Justieren im Hinblick auf eine jeweilige Sende- bzw. Empfangsoptiksollbrennweite andererseits, miteinander kombiniert werden.

Gemäß einer weiteren vorteilhaften Ausführungsform ist eine Auswerteeinrichtung vorgesehen, welche mit der Lichtquelle und dem Lichtempfänger verbunden ist und dazu eingerichtet ist, die Lichtquelle zum Erzeugen eines Lichtpulses zu aktivieren und den Abstand zwischen dem Sensor und einem Auftreffort des Lichtpulses auf einer Oberfläche des Objekts auf der Grundlage der Laufzeit des Lichtpulses zwischen dem Erzeugen und dem Erfassen von remittierendem Licht durch den Lichtempfänger zu ermitteln. Der Lichtpuls erzeugt hierbei den Sendelichtfleck. Der optoelektronische Sensor ist somit zum abstandsmessenden Erfassen von Objekten nach dem Prinzip eines vorstehend bereits beschriebenen LIDAR-Systems eingerichtet. Es hat sich gezeigt, dass der erfindungsgemäße Ansatz bei derartigen abstandsmessenden Systemen von besonderem Vorteil ist.

Auf ähnliche Weise lässt sich die Erfindung auch vorteilhaft in einem FMCW-LIDAR-System (FMCW für Frequency-Modulated-Continous-Wave) einsetzen.

Vorteilhafterweise weist der Lichtempfänger bei einem abstandsmessenden System eine Vielzahl von in Zeilen und Spalten angeordneten lichtempfindlichen Empfangselementen auf, wobei die Auswerteeinrichtung dazu eingerichtet ist, den Abstand zwischen dem Sensor und dem Auftreffort des Empfangslichtfleckes ortsaufgelöst aus einem vom Lichtempfänger erfassten Abbild des Empfangslichtflecks zu ermitteln. Die ortsaufgelöste Ermittlung des Abstands zwischen dem Sensor und dem erfassten Objekt bedeutet, für jedes Empfangselement einen zugeordneten Abstandswert zu ermitteln. Ein derartiger Sensor kann als ein ortsauflösendes LIDAR-System bezeichnet werden, bei dem ein vorstehend bereits erläuterter TOF-Bildsensor zum Einsatz gelangt.

Weitere Vorteile des erfindungsgemäßen optoelektronischen Sensors und vorteilhafte Ausführungsformen ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird diese Merkmale zweckmäßigerweise auch einzeln betrachten und zu sinnvollen weiteren Kombinationen zusammenfassen.

Es zeigen:
- Fig. 1: eine schematische Ansicht eines optoelektronischen Sensors gemäß einem Ausführungsbeispiel;
- Fig. 2: eine schematische Querschnittsdarstellung einer Empfangsanordnung des optoelektronischen Sensors von Fig. 1;
- Fig. 3a und 3b: Ausschnittsdarstellungen der Empfangsanordnung von Fig. 2; und
- Fig. 4a und 4b: schematische Darstellungen von Sende- und Empfangssichtfeldern des optoelektronischen Sensors von Fig. 1.

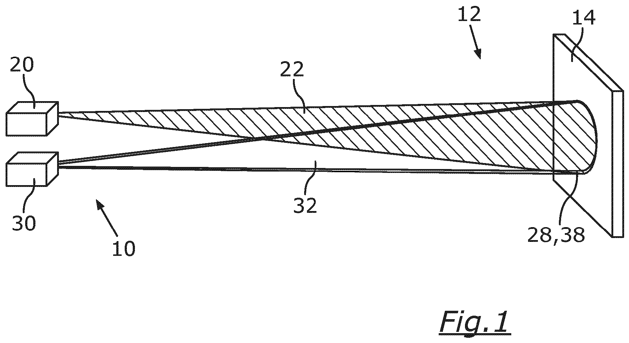

Fig. 1 zeigt einen optoelektronischen Sensor 10 gemäß einem Ausführungsbeispiel, welcher zum Erfassen von Objekten 14 in einem Überwachungsbereich 12 eingerichtet ist.

Der optoelektronische Sensor 10 umfasst eine Lichtsenderanordnung 20, welche zum Aussenden von gepulsten oder kontinuierlichen Sendelichtsignalen in den Überwachungsbereich 12 eingerichtet ist. Die Sendelichtsignale werden in Form eines divergenten Sendelichtbündels 22 ausgesendet. Das Sendelichtbündel 22 erzeugt beim Auftreten auf einer Oberfläche des Objekts 14 einen Sendelichtfleck 28. Der optoelektronische Sensor 10 umfasst weiterhin eine Empfangsanordnung 30, welche auf derselben Seite des Überwachungsbereichs 12 benachbart zu der Lichtsenderanordnung 20 angeordnet ist.

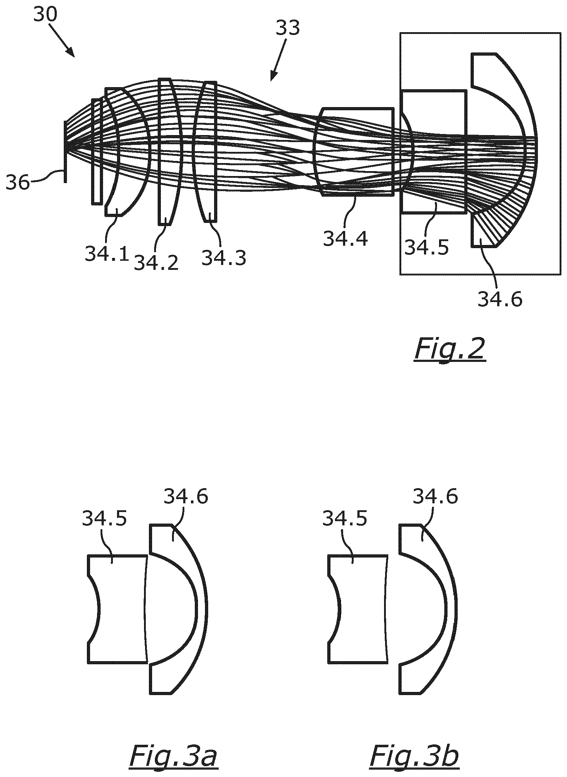

Die Empfangsanordnung 30 umfasst gemäß der Detaildarstellung von Fig. 2 einen ortsauflösenden Lichtempfänger 36 und eine dem Lichtempfänger 36 vorgeordnete Empfangsoptikanordnung 33, welche hier insgesamt sechs Linsen 34.1 bis 34.6 umfasst.

Die Lichtsenderanordnung 20 (Fig. 1) kann einen zur Empfangsanordnung 30 (Fig. 2) korrespondieren Aufbau aufweisen. So kann beispielsweise dort, wo bei der Empfangsanordnung der Lichtempfänger 36 angedeutet ist, eine Lichtquelle angeordnet sein, welcher eine Sendeoptikanordnung nachgeordnet ist, deren Aufbau der Empfangsoptikanordnung 33 entspricht, d.h. es werden Linsen mit der gleichen Brennweite verwendet und in zumindest annähernd gleichen Abständen positioniert.

**In** der Darstellung von Fig. 1 sind die Lichtsenderanordnung 20 und die Empfangsanordnung 30 derart aufeinander abgestimmt und ausgerichtet, dass die Größe des Sendelichtflecks 28 im Wesentlichen gleich der Größe eines Empfangssichtfelds 38 der Empfangsanordnung 30 ist. Das Empfangssichtfeld 38 ist derjenige Bereich auf einem erfassten Objekt 14, der von der Empfangsoptikanordnung 33 in einen vorgegebenen Bereich auf dem Lichtempfänger 36 projiziert wird (Fig. 2). In Analogie zu dem Begriff "Empfangssichtfeld" kann der Sendelichtfleck 28 auch als Sendesichtfeld 28 bezeichnet werden.

In Fig. 3a und 3b ist ein Ausschnitt der Empfangsoptikanordnung 33 dargestellt, welcher in Fig. 2 durch einen rechteckigen Rahmen markiert ist und die fünfte Linse 34.5 und die sechste Linse 34.6 umfasst. Wie ein Vergleich von Fig. 3a und 3b zeigt, ist der Abstand der Linsen 34.5 und 34.6 veränderbar. Zur Veränderung dieses Abstands kann beispielsweise die sechste Linse 34.6 längs der optischen Achse der Empfangsoptikanordnung 33 versetzbar sein. Eine Einstellung des Abstands zwischen den Linsen 34.5, 34.6 kann alternativ auch durch ein Versetzen der Linse 34.5 erfolgen. Grundsätzlich können auch andere Linsen 34.1 bis 34.4 versetzbar ausgeführt sein.

Durch das Verändern des Abstandes zwischen zwei (oder mehr) Linsen 34.1 bis 34.6 kann die Brennweite der Empfangsoptikanordnung 33 in gewissen Grenzen auf eine gewünschte Empfangsoptiksollbrennweite eingestellt werden.

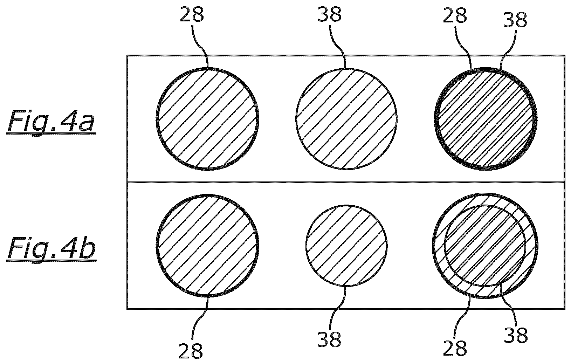

In Fig. 4a und 4b sind jeweils das Sendesichtfeld 28 und das Empfangssichtfeld 38 bei Auftreffen auf einem Objekt einzeln (links und Mitte) und in überlagerter Darstellung (rechts) gezeigt. Wie in der Darstellung von Fig. 4b zu erkennen ist, ist die Größe des Empfangssichtfelds 38 kleiner als die Größe des Sendesichtfelds 28. Diese Fehlanpassung führt zu einer verringerten Leistungsfähigkeit des optoelektronischen Sensors und kann durch die mit Bezug auf Fig. 2 beschriebene Änderung der Gesamtbrennweite der Empfangsoptikanordnung 33 korrigiert werden. Durch ein entsprechendes Verändern des Abstands zwischen den Linsen 34.5 und 34.6 kann die Gesamtbrennweite der Empfangsoptikanordnung 33 derart verändert werden, dass das Sendesichtfeld 28 und das Empfangssichtfeld 38 die gleiche Größe aufweisen. Das Ergebnis einer entsprechenden Justage ist in Fig. 4a gezeigt und entspricht im Übrigen auch der Darstellung der Sichtfelder 28, 38 in Fig. 1.

In der Darstellung von Fig. 4a und 4b besitzen die Sichtfelder 28, 38 jeweils eine kreisförmige Form. In Abhängigkeit von der Konfiguration kann beispielsweise durch die Verwendung von entsprechend gestalteten Blenden auch eine abweichende Gestalt der Sichtfelder 28, 38 realisiert werden.

Gemäß einer nicht dargestellten Abwandlung kann alternativ die Lichtsenderanordnung 20 eine Sendeoptikanordnung aufweisen, bei welcher der Abstand von wenigstens zwei Linsen eingestellt werden kann, während bei der Empfangsoptikanordnung 33 die Abstände der Linsen nicht einstellbar sind.

Gemäß einer weiteren nicht dargestellten Abwandlung können sowohl bei der Sendeoptikanordnung als auch bei der Empfangsoptikanordnung 33 die Abstände von wenigstens zwei jeweiligen Linsen zueinander einstellbar sein.

Der Brennweitenbereich, innerhalb dessen die Gesamtbrennweite der Sendeoptikanordnung bzw. der Empfangsoptikanordnung 33 variiert werden kann, wird durch die Fähigkeit des Herstellers der in den Optikanordnungen verwendeten Linsen bestimmt, die Fertigungstoleranzen der Linsen zu kontrollieren. Je größer die Fertigungstoleranzen sind, desto größer muss der erforderliche Brennweitenbereich sein.

### Bezugszeichenliste

- 10: optoelektronischer Sensor
- 12: Überwachungsbereich
- 14: Objekt
- 20: Lichtsenderanordnung
- 22: Sendelichtbündel
- 28: Sendelichtfleck, Sendesichtfeld
- 30: Empfangsanordnung
- 32: Empfangslichtbündel
- 33: Empfangsoptikanordnung
- 34.1 bis 34.6: Linse
- 36: Lichtempfänger
- 38: Empfangssichtfeld

## Patentansprüche

1. Optoelektronischer Sensor (10) zum Erfassen von Objekten in einem Überwachungsbereich (12),
mit einer Lichtsenderanordnung (20), welche zum Erzeugen eines Sendelichtflecks (28) auf einem im Überwachungsbereich (12) anwesenden Objekt eingerichtet (14) ist und eine Lichtquelle zum Erzeugen von Sendelicht und eine Sendeoptikanordnung zum Fokussieren des Sendelichts umfasst, und
mit einer Empfangsanordnung (30), umfassend einen Lichtempfänger (36), und eine Empfangsoptikanordnung (33), welche zum Abbilden eines Sendelichtflecks (28), welcher von der Lichtsenderanordnung (20) auf einem im Überwachungsbereich (12) anwesenden Objekt (14) erzeugt wurde, in einen Empfangslichtfleck auf dem Lichtempfänger (36) eingerichtet ist, **dadurch gekennzeichnet,**
**dass** die Sendeoptikanordnung wenigstens zwei Linsen umfasst, deren Abstand zueinander einstellbar ist, und/oder die Empfangsoptikanordnung (33) wenigstens zwei Linsen (34.1 - 34.6) umfasst, deren Abstand zueinander einstellbar ist.

2. Optoelektronischer Sensor (10) nach Anspruch 1,
**dadurch gekennzeichnet,**
**dass** der einstellbare Abstand zwischen den Linsen der Sendeoptikanordnung und/oder der einstellbare Abstand zwischen den Linsen (34.1 - 34.6) der Empfangsoptikanordnung (33) derart gewählt ist, dass die Größe des Sendelichtflecks (28) im Wesentlichen gleich der Größe eines Empfangssichtfeldes der Empfangsanordnung (30) ist.

3. Optoelektronischer Sensor (10) nach Anspruch 1 oder 2,
**dadurch gekennzeichnet,**
**dass** der einstellbare Abstand zwischen den Linsen der Sendeoptikanordnung derart gewählt ist, dass die resultierende Gesamtbrennweite der Sendeoptikanordnung gleich einer vorgegebenen Sendeoptiksollbrennweite ist, und/oder der einstellbare Abstand zwischen den Linsen (34.1 - 34.6) der Empfangsoptikanordnung (33) derart gewählt ist, dass die resultierende Gesamtbrennweite der Empfangsoptikanordnung (33) gleich einer vorgegebenen Empfangsoptiksollbrennweite ist.

4. Optoelektronischer Sensor (10) nach einem der vorhergehenden Ansprüche,
**dadurch gekennzeichnet,**
**dass** eine Auswerteeinrichtung vorgesehen ist, welche mit der Lichtquelle und dem Lichtempfänger (36) verbunden ist und dazu eingerichtet ist, die Lichtquelle zum Erzeugen eines Lichtpulses zu aktivieren und den Abstand zwischen dem Sensor (10) und einem Auftreffort des Lichtpulses auf einer Oberfläche des Objekts (14) auf der Grundlage der Laufzeit des Lichtpulses zwischen dem Erzeugen und dem Erfassen von remittiertem Licht durch den Lichtempfänger (36) zu ermitteln.

5. Optoelektronischer Sensor (10) nach Anspruch 4,
**dadurch gekennzeichnet,**
**dass** der Lichtempfänger (36) eine Vielzahl von in Zeilen und Spalten angeordneten lichtempfindlichen Empfangselementen aufweist, und
**dass** die Auswerteeinrichtung dazu eingerichtet ist, den Abstand zwischen dem Sensor (10) und dem Auftreffort des Lichtpulses aus einem vom Lichtempfänger (36) erfassten Abbild des Empfangslichtflecks ortsaufgelöst zu ermitteln.
